(19) **Europäisches Patentamt**

**European Patent Office**

**Office européen des brevets**

(11) **EP 1 204 221 A1**

(12) **EUROPEAN PATENT APPLICATION**
published in accordance with Art. 158(3) EPC

(43) Date of publication:
08.05.2002 Bulletin 2002/19

(51) Int Cl.⁷: $H04B\ 7/06$, $H04J\ 13/04$

(21) Application number: 01926015.7

(86) International application number:
PCT/JP01/03689

(22) Date of filing: 27.04.2001

(87) International publication number:
WO 01/84742 (08.11.2001 Gazette 2001/45)

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 28.04.2000 JP 2000131672

(71) Applicant: **MATSUSHITA ELECTRIC INDUSTRIAL
CO., LTD.**
**Kadoma-shi, Osaka 571-8501 (JP)**

(72) Inventors:
• **AIHARA, Koichi**
**Yokosuka-shi, Kanagawa 239-0847 (JP)**

• **SUZUKI, Hidetoshi**
**Yokosuka-shi, Kanagawa 239-0847 (JP)**
• **IMAIZUMI, Satoshi**
**Yokosuka-shi, Kanagawa 239-0831 (JP)**
• **SOMON, Junji**
**Kanazawa-shi, Ishikawa 920-0867 (JP)**

(74) Representative: **Grünecker, Kinkeldey,
Stockmair & Schwanhäusser Anwaltssozietät
Maximilianstrasse 58
80538 München (DE)**

(54) **RADIO RECEIVER AND RADIO RECEIVING METHOD**

(57)    Changeover control section 201 controls changeover operations of switch 202, switch 203 and symbols $D_{plus}$'s including only +A are sorted and output to the memory 204 side and symbols $D_{minus}$'s including -A are sorted and output to the memory 205 side, memory 204 and adder 206 perform in-phase additions between $D_{plus}$'s and memory 205 and adder 206 perform in-phase additions between $D_{minus}$'s and square addition section 207 calculates the squares of $D_{plus}$'s after the in-phase addition and the squares of $D_{minus}$'s after the in-phase addition and then adds up the squared $D_{plus}$'s and $D_{minus}$'s.

FIG. 6

EP 1 204 221 A1

**Description**

Technical Field

The present invention relates to a radio reception apparatus and radio reception method, and more particularly, to a radio reception apparatus and radio reception method used in a radio communication system carrying out transmission diversity using a plurality of antennas.

Background Art

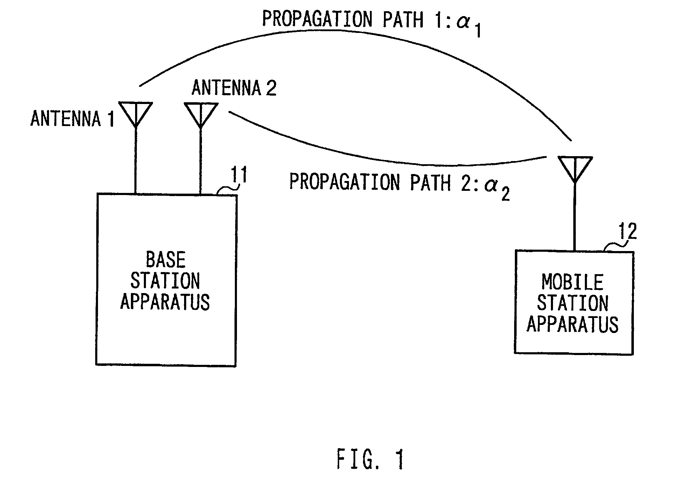

In a mobile communication system, a base station apparatus may carry out transmission diversity when transmitting common pilot channel signals in order to improve reception characteristics of mobile station apparatuses. FIG. 1 shows that a base station apparatus is transmitting common pilot symbols to a mobile station apparatus through transmission diversity using two antennas.

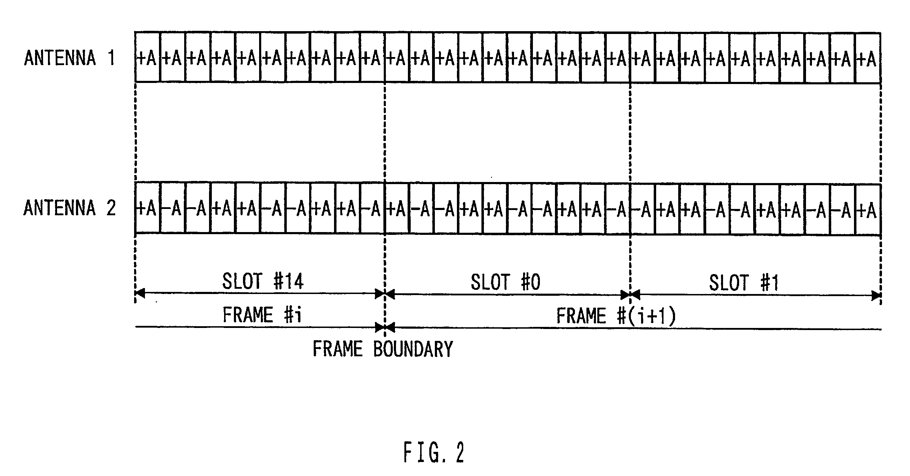

The Mobile Communication Standard 3G TS 25.211 version 3.1.0 5.3.3.1 (page 21) defines transmission patterns of pilot symbols sent from each antenna. FIG.2 shows transmission patterns of pilot symbols defined by the Mobile Communication Standard 3G TS 25.211 version 3.1.0.

Base station apparatus 11 always sends symbol +A from antenna 1 to mobile station apparatus 12 as shown on the upper row of FIG.2. The pilot symbol sent from antenna 1 is sent to mobile station apparatus 12 through propagation path 1 with propagation factor $\alpha_1$. Furthermore, base station apparatus 11 sends symbol +A and symbol -A from antenna 2 to mobile station apparatus 12 according to transmission patterns shown on the lower row of FIG.2. The pilot symbols sent from antenna 2 are sent to mobile station apparatus 12 through propagation path 2 with propagation factor $\alpha_2$. Here, symbol -A is modulated symbol A with its sign inverted and symbol +A is modulated symbol A with no sign inversion.

Mobile station apparatus 12 adds up pilot channel signals containing pilot symbols sent from antenna 1 and pilot symbols sent from antenna 2 according to a predetermined method. This allows mobile station apparatus 12 to improve reception characteristics by an amount corresponding to diversity gain with respect to pilot symbols. Furthermore, mobile station apparatus 12 assigns fingers to dedicated communication channel signals using a delay profile created from these pilot symbols, thus making it possible to improve reception characteristics of the dedicated communication channel signals.

Here, mobile station apparatus 12 adds pilot channel signals using power additions or in-phase additions. Mobile station apparatus 12 can further improve reception characteristics using in-phase additions compared to power addictions. A radio reception apparatus that carries out in-phase additions on pilot channel signals sent as shown in FIG.1 and FIG.2 will be explained below. FGI.3 is a main block diagram showing an outlined configuration of a conventional radio reception apparatus mounted on a mobile station apparatus.

A pilot channel signal containing a pilot symbol sent from antenna 1 and a pilot symbol sent from antenna 2 is received by radio reception section 14 via antenna 13. The pilot channel signal is subjected to predetermined radio processing (down-conversion, A/D conversion, etc. ) by radio reception section 14 and output to correlation value calculation section 15.

Correlation value calculation section 15 applies despreading processing to the pilot channel signal and outputs signal D ($\tau$) shown in Expression (1).

$$D\ (\tau) = \int_0^{Ts} R(t+\tau) \times c(t)dt \qquad \cdots (1)$$

where, R(t) denotes a signal output from radio reception section 14 and C(t) denotes spreading code with which the pilot channel signal is spread. To make explanations easier to understand, a case where $\tau$ matches the reception timing of the pilot symbol will be explained.

Thus, when symbol +A is being sent from antenna 2, the output of correlation value calculation section 15 is:

$$D_{plus} = \alpha_1 A T_s + \alpha_2 A T_s + N_1 \qquad (2)$$

On the other hand, when symbol -A is being sent from antenna 2, the output of correlation value calculation section is:

$$D_{\min\ us} = \alpha_1 A T_s - \alpha_2 A T_s + N_2 \tag{3}$$

where, $N_j$ denotes noise and $T_s$ denotes a 1-symbol time.

Signal $D_{plus}$ and signal $D_{minus}$ output from correlation value calculation section 15 are subjected to in-phase additions 2n times by memory 16 and adder 17. And after being subjected to in-phase additions 2n times, the signal shown in Expression (4) is output from the memory 16.

$$\sum_{i=1}^{2n} (D_{plus,i} + D_{\min us,i}) = \sum_{i=1}^{n} (2\alpha_1 A T_s + N_1 - N_2) \quad \cdots (4)$$

The signal shown in Expression (4) is squared by square section 18 and averaged by delay profile averaging section 19. Thus, an averaged delay profile is output from delay profile averaging section 19 as shown in Expression (5).

$$\overline{4 T_s^2 n^2 (\alpha_1 A)^2 + 2n\sigma^2} \tag{5}$$

where, the first term of Expression (5) is a signal component and the second term is a noise component.

Therefore, S/N of the pilot channel signal is:

$$S/N = \frac{\overline{2 T_s^2 n (\alpha 1 A)^2}}{\overline{\sigma^2}} \tag{6}$$

Finger assignment section 20 outputs the signal indicating the position of each finger on the averaged delay profile to despreading section 21. Then, despreading section 21 carries out despreading processing on a dedicated communication channel signal subjected to predetermined radio processing by radio reception section 14 according to the timing at which each finger occurs. The despread dedicated communication channel signal is subjected to predetermined demodulation processing by demodulation section 22 and reception data is obtained in this way.

However, when an in-phase addition is performed using the above conventional radio reception apparatus, the component associated with the symbol sent from antenna 2 (that is, the component associated with $\alpha_2$) disappears as shown in Expression (4) above. For this reason, as is apparent from Expression (6) above, S/N of the pilot channel signal is expressed only with the component associated with the symbol sent from antenna 1 (that is, the component associated with $\alpha_1$).

Therefore, when an in-phase addition is simply performed on a pilot channel signal sent through diversity transmission using the above conventional radio reception apparatus, there is a problem that it is no longer possible to obtain diversity gain and improve the reception characteristics.

Disclosure of Invention

It is an object of the present invention to provide a radio reception apparatus and radio reception method capable of obtaining diversity gain even when an in-phase addition is carried out on a pilot channel signal sent through diversity transmission and improve the reception characteristics.

In order to attain the above object, the present invention sorts reception signals each having a first signal containing only a no sign-inverted symbol +A sent through a propagation path having a first propagation coefficient and a second signal containing a no sign-inverted symbol +A and a sign-inverted symbol -A sent through a propagation path having a second propagation coefficient, corresponding to a symbol pattern of the second signal, to obtain an in-phase addition of the first signals and an in-phase addition of the second signals, so that the signal expressed with the second propagation coefficient is not lost. In this way, the present invention can improve the reception characteristics of reception signals through in-phase additions and at the same time obtain diversity gain.

Brief Description of Drawings

FIG.1 shows that a base station apparatus is transmitting common pilot symbols to a mobile station apparatus through transmission diversity using two antennas;

FIG.2 shows transmission patterns of pilot symbols defined by the Mobile Communication Standard 3G TS 25.211 version 3.1.0;

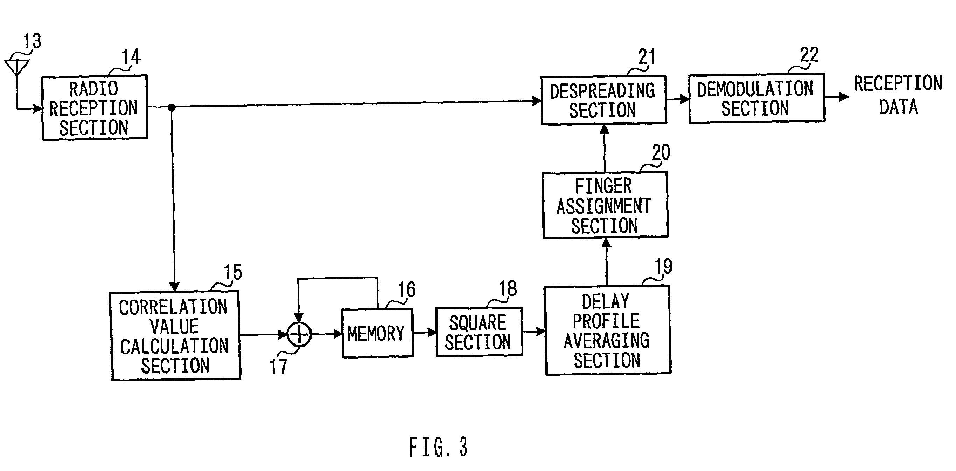

FIG.3 is a block diagram showing an outlined configuration of a conventional radio reception apparatus mounted on a mobile station apparatus;

FIG.4 is a main block diagram showing an outlined configuration of a radio reception apparatus according to Embodiment 1 of the present invention;

FIG.5 illustrates pilot symbol transmission patterns defined by the Mobile Communication Standard 3G TS 25.211 version 3.1.0;

FIG.6 is a main block diagram showing an outlined configuration of a radio reception apparatus according to Embodiment 2 of the present invention;

FIG.7 is a main block diagram showing an outlined configuration of a radio reception apparatus according to Embodiment 3 of the present invention;

FIG.8 illustrates pilot symbol transmission patterns defined by the Mobile Communication Standard 3G TS 25.211 version 3.1.0;

FIG.9 is a main block diagram showing an outlined configuration of a radio reception apparatus according to Embodiment 4 of the present invention;

FIG.10 is a main block diagram showing an outlined configuration of a radio reception apparatus according to Embodiment 5 of the present invention;

FIG.11 is a main block diagram showing an outlined configuration of a radio reception apparatus according to Embodiment 6 of the present invention;

FIG.12 illustrates pilot symbol transmission patterns defined by the Mobile Communication Standard 3G TS 25.211 version 3.1.0; and

FIG.13 illustrates pilot symbol transmission patterns defined by the Mobile Communication Standard 3G TS 25.211 version 3.1.0.

Best Mode for Carrying out the Invention

With reference now to the attached drawings, embodiments of the present invention will be explained in detail below.

(Embodiment 1)

The radio reception apparatus according to Embodiment 1 of the present invention separates a received pilot channel signal by antenna and then carries out an in-phase addition.

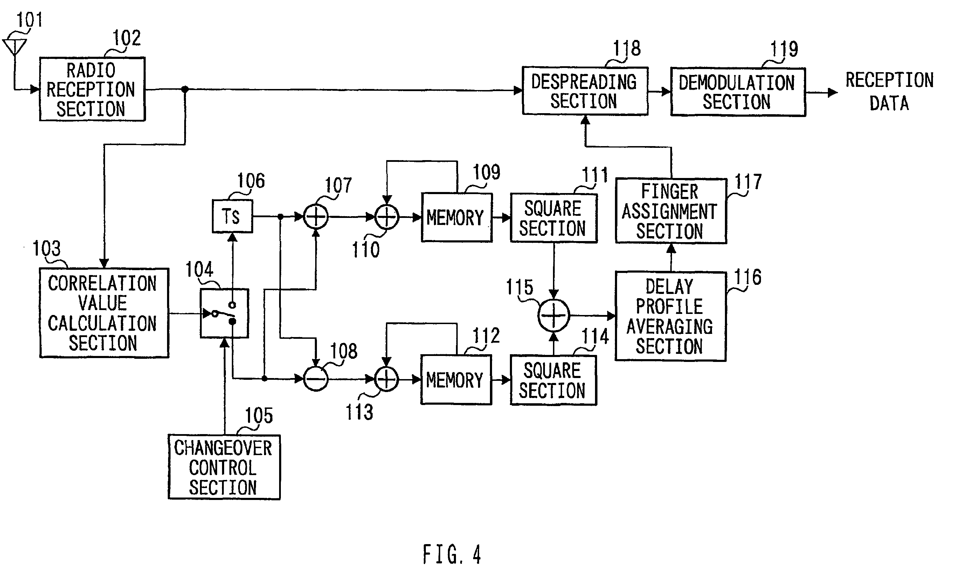

FIG.4 is a main block diagram showing an outlined configuration of the radio reception according to Embodiment 1 of the present invention. In FIG.4, radio reception section 102 applies predetermined radio processing (down-conversion, A/D conversion, etc.) to a signal received via antenna 101. Correlation value calculation section 103 carries out despreading processing on the pilot channel signal. Changeover control section 105 controls changeover operations of switch 104.

Delayer 106 delays the pilot channel signal by a 1-symbol time. Adder 107 adds the pilot channel signal delayed by the 1-symbol time to the pilot channel signal. Subtractor 108 subtracts the pilot channel signal delayed by the 1-symbol time from the pilot channel signal.

Memory 109 and adder 110 carry out an in-phase addition on the signal output from adder 107. Memory 112 and adder 113 carry out an in-phase addition on the signal output from subtractor 108.

Square section 111 squares the signal subjected to the in-phase addition by memory 109 and adder 110. Square section 114 squares the signal subjected to the in-phase addition by memory 112 and adder 113. Adder 115 adds up the signal squared by square section 111 and the signal squared by square section 114.

Delay profile averaging section 116 calculates an averaged value of the delay profile. Finger assignment section 117 assigns a finger to a dedicated communication channel signal according to the averaged delay profile.

Despreading section 118 applies despreading processing to the dedicated communication channel signal according to the finger assignment. Demodulation section 119 applies predetermined demodulation processing to the despread dedicated communication channel signal. Reception data is obtained in this way.

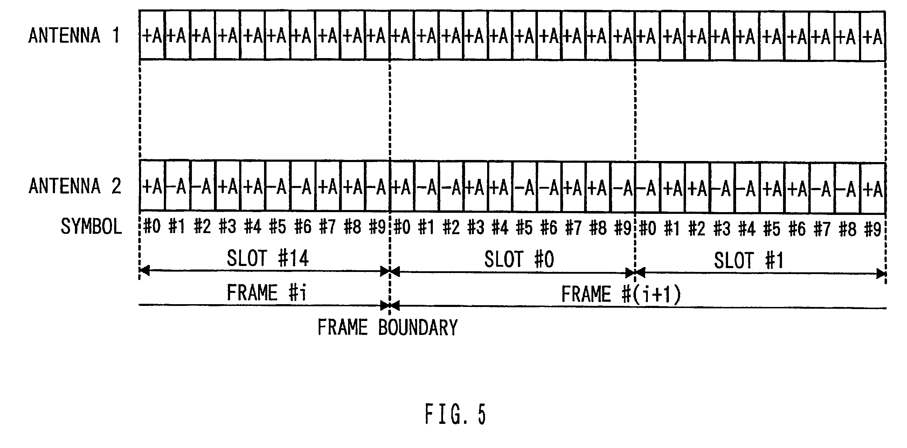

Then, an operation of the radio reception apparatus in the above configuration will be explained using FIG. 5. FIG.5 illustrates pilot symbol transmission patterns defined by the Mobile Communication Standard 3G TS 25.211 version 3.1.0.

A pilot channel signal including pilot symbols sent from antenna 1 of the base station apparatus through propagation path 1 and pilot symbols sent from antenna 2 of the base station apparatus through propagation path 2 is received by radio reception section 102 via antenna 101. The pilot channel signal is subjected to predetermined radio processing (down-conversion, A/D conversion, etc.) by radio reception section 102 and output to correlation value calculation section 103.

Correlation value calculation section 103 applies despreading processing to the pilot channel signal and outputs signal D(τ) shown in Expression (7).

$$D\,(\tau) = \int_0^{T_s} R(t+\tau) \times \dot{c}(t)dt \qquad \cdots(7)$$

where, R(t) denotes the signal output from radio reception section 102 and C(t) denotes a spreading code with which the pilot channel signal is spread. To make explanations easier to understand, a case where τ matches the reception timing of the pilot symbol will be explained.

Thus, when symbol +A from antenna 2 is being received, the output of correlation value calculation section 103 is:

$$D_{plus} = \alpha_1 AT_s + \alpha_2 AT_s + N_1 \qquad (8)$$

On the other hand, when symbol -A from antenna 2 is being received, the output of correlation value calculation section 103 is:

$$D_{min\ us} = \alpha_1 AT_s - \alpha_2 AT_s + N_2 \qquad (9)$$

where, $\alpha_1$ denotes a propagation coefficient of propagation path 1; $\alpha_2$, a propagation coefficient of propagation path 2; $N_j$, noise; and $T_s$, a 1-symbol time.

That is, when focused on slot #0 in FIG.5, $D_{plus}$ is output from correlation value calculation section 103 at the timing at which symbol #0, #3, #4, #7 or #8 is received and $D_{minus}$ is output from correlation value calculation section 103 at the timing at which symbol #1, #2, #5, #6 or #9 is received.

$D_{plus}$ and $D_{minus}$ output from correlation value calculation section 103 are sorted and output to the delayer 106 side or the subtractor 108 side symbol by symbol through the changeover operation of switch 104 by changeover control section 105 according to the symbol pattern of the pilot symbols which are sent from antenna 2. That is, changeover control section 105 sets switch 104 to the delayer 106 side at the timing at which a symbol with an odd number from the start of the slot (that is, symbol #0, #2, #4, #6, #8) is received. On the other hand, changeover control section 105 sets switch 104 to the subtractor 108 side at the timing at which a symbol with an even number from the start of the slot (that is, symbol #1, #3, #5, #7, #9) is received.

Therefore, the signals output to delayer 106 are $D_{plus}$ at symbol #0, $D_{minus}$ at symbol #2, $D_{plus}$ at symbol #4, $D_{minus}$ at symbol #6 and $D_{plus}$ at symbol #8. On the other hand, the signals output to adder 107 and subtractor 108 are $D_{minus}$ at symbol #1, $D_{plus}$ at symbol #3, $D_{minus}$ at symbol #5, $D_{plus}$ at symbol #7 and $D_{minus}$ at symbol #9. Thus, the repletion cycle of $D_{minus}$ and $D_{plus}$ is common to the delayer 106 side and subtractor 108 side. Then, the signal output to delayer 106 is delayed by a 1-symbol time at a time.

In this way, $D_{plus}$ at symbol #0 and $D_{minus}$ at symbol #1 are added by adder 107 and subtracted by subtractor 108. Hereafter, likewise, $D_{minus}$ at symbol #2 and $D_{plus}$ at symbol #3, $D_{plus}$ at symbol #4 and $D_{minus}$ at symbol #5, $D_{minus}$ at symbol #6 and $D_{plus}$ at symbol #7, and $D_{plus}$ at symbol #8 and $D_{minus}$ at symbol #9 are added by adder 107 and subtracted by subtractor 108, respectively. Subtractor 108 subtracts $D_{minus}$ from $D_{plus}$.

Thus, the output of adder 107 is:

$$C_1 = D_{plus} + D_{minus}$$
$$= 2\alpha_1 A T_s + N_1 + N_2 \qquad \cdots(10)$$

On the other hand, the output of subtractor 108 is:

$$C_2 = D_{plus} - D_{minus}$$
$$= 2\alpha_2 A T_s + N_1 - N_2 \qquad \cdots(11)$$

Here, when attention is focused on Expression (10) and Expression (11) above, the signal component is only the component associated with the symbol sent from antenna 1 (that is, component associated with $\alpha_1$) in Expression (10) and only the component associated with the symbol sent from antenna 2 (that is, component associated with $\alpha_2$) in Expression (11). That is, by adding or subtracting $D_{plus}$ and $D_{minus}$, the received pilot channel signal is separated antenna by antenna.

Signal $C_1$ output from adder 107 is subjected to in-phase additions n times by memory 109 and adder 110. Thus, the signal output from memory 109 after n in-phase additions is:

$$\sum_{i=1}^{n}(C_1) = n(2\alpha_1 A T_s + N_1 + N_2) \qquad \cdots(12)$$

On the other hand, signal $C_2$ output from subtractor 108 is subjected to in-phase additions n times by memory 112 and adder 113. Thus, the signal output from memory 112 after n in-phase additions is:

$$\sum_{i=1}^{n}(C_2) = n(2\alpha_2 A T_s + N_1 - N_2) \qquad \cdots(13)$$

The signal indicated by Expression (12) above is squared by square section 111 and the signal indicated by Expression (13) above is squared by square section 114. The squared signals are added up by adder 115 and averaged by delay profile averaging section 116. Thus, an averaged delay profile shown in Expression (14) is output from delay profile averaging section 116.

$$\overline{4 T_s^2 n^2 \{(\alpha_1 A)^2 + (\alpha_2 A)^2\} + 4n\sigma^2} \qquad (14)$$

Here, the first term in Expression (14)above is a signal component and the second term is a noise component.
Thus, S/N of the pilot channel signal is:

$$S/N = \frac{\overline{T_s^2 n\{(a_1 A)^2 + (a_2 A)^2\}}}{\overline{\sigma^2}}. \qquad (15)$$

Here, when attention is focused on Expression (15) above, S/N is expressed by the component associated with the symbol sent from antenna 1 (that is, the component associated with $\alpha_1$) and the component associated with the symbol sent from antenna 2 (that is, the component associated with $\alpha_2$). Thus, according to the radio reception apparatus of this embodiment, it is also possible to obtain diversity gain when an in-phase addition is performed on the pilot channel signal.

Then, finger assignment section 117 outputs the signal indicating the position of each finger on the averaged delay profile to despreading section 118. Despreading section 118 carries out despreading processing on the dedicated communication channel signal subjected to predetermined radio processing by radio reception section 102 according to the timing at which each finger occurs. The despread dedicated communication channel signal is subjected to predetermined demodulation processing by demodulation section 119 and reception data is obtained in this way.

Thus, according to the radio reception apparatus according to this embodiment, received pilot channel signals are separated antenna by antenna and then subjected to an in-phase addition, and therefore it is possible to carry out an in-phase addition on the pilot channel signals and obtain diversity gain as well. Thus, the radio reception apparatus according to this embodiment can improve the reception characteristics.

(Embodiment 2)

The radio reception apparatus according to Embodiment 2 of the present invention carries out in-phase additions between correlation values $D_{plus}$ corresponding to +A sent from antenna 2 and in-phase additions between correlation values $D_{minus}$ corresponding to -A sent from antenna 2.

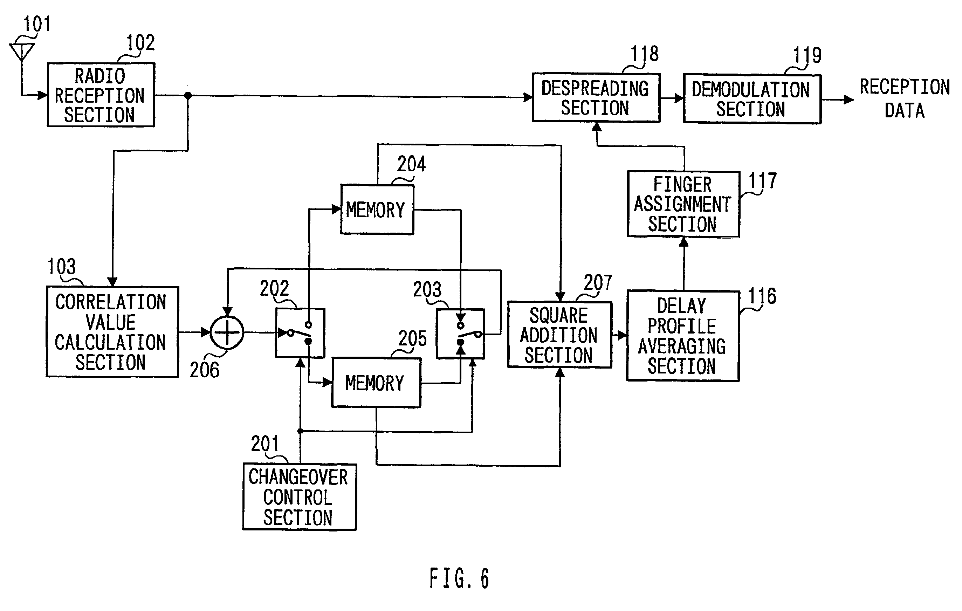

FIG.6 is a main block diagram showing an outlined configuration of the radio reception apparatus according to Embodiment 2 of the present invention. The same components as those of Embodiment 1 are assigned the same reference numerals and detailed explanations thereof are omitted.

In FIG.6, changeover control section 201 controls changeover operations of switch 202 and switch 203. Memory 204 and adder 206 carry out in-phase additions between $D_{plus}$'s. On the other hand, memory 205 and adder 206 carry out in-phase additions between $D_{minus}$'s. Square addition section 207 calculates the squares of $D_{plus}$'s and $D_{minus}$'s and adds up the squared values.

Then, an operation of the radio reception apparatus in the above configuration will be explained using FIG.5 again. $D_{plus}$'s and $D_{minus}$'s output from correlation value calculation section 103 are sorted between $D_{plus}$'s and $D_{minus}$'s and output by switching operations of switch 202 and switch 203 under the control of changeover control section 201. That is, when attention is focused on slot #0, changeover control section 105 sets switch 202 and switch 203 to the memory 204 side at the timing at which +A is received from antenna 2 (that is, timing at which symbol #0, #3, #4, #7 or #8 is received). On the other hand, changeover control section 201 sets switch 202 and switch 203 to the memory 205 side at the timing at which -A is received from antenna 2 (that is, timing at which symbol #1, #2, #5, #6 or #9 is received). Thus, only $D_{plus}$'s are output to memory 204, while only $D_{minus}$'s are output to memory 205.

$D_{plus}$'s output to memory 204 are subjected to in-phase additions n times by memory 204 and adder 206. Therefore, the signal output from memory 204 to square addition section 207 after n in-phase additions is:

$$\sum_{i=1}^{n}(D_{plus}) = n(\alpha_1 A T_s + \alpha_2 A T_s + N_1) \quad \cdots(16)$$

On the other hand, $D_{minus}$'s output to memory 205 are subjected to in-phase additions n times by memory 205 and adder 206. Therefore, the signal output from memory 205 to square addition section 207 after n in-phase additions is:

$$\sum_{i=1}^{n}(D_{minus}) = n(\alpha_1 A T_s - \alpha_2 A T_s + N_2) \quad \cdots(17)$$

The signal indicated by Expression (16) and the signal indicated by Expression (17) are squared and then added up by square addition section 207 and averaged by delay profile averaging section 116. Thus, delay profile averaging section 116 outputs the averaged delay profile as shown in Expression (18).

$$\overline{2 T_s^2 n^2 \{(\alpha_1 A)^2 + (\alpha_2 A)^2\} + 2n\sigma^2} \tag{18}$$

Here, the first term in Expression (18) is a signal component and the second term is a noise component.

Thus, S/N of the pilot channel signal is:

$$S/N = \frac{\overline{T_s^2 n\{(\alpha_1 A)^2 + (\alpha_2 A)^2\}}}{\overline{\sigma^2}}$$

(19)

Here, when attention is focused on Expression (19) above, as in the case of Embodiment 1, S/N is expressed by the component associated with the symbol sent from antenna 1 (that is, the component associated with $\alpha_1$) and the component associated with the symbol sent from antenna 2 (that is, the component associated with $\alpha_2$). That is, instead of separating a pilot channel signal antenna by antenna and then carrying out in-phase additions as in the case of Embodiment 1, even if an in-phase addition is performed between $D_{plus}$'s and between $D_{minus}$'s, it is also possible to obtain diversity gain on the pilot channel signal.

Furthermore, a comparison between the radio reception apparatus according to this embodiment and the radio reception apparatus according to Embodiment 1 shows that the configuration from correlation value calculation section 103 to delay profile averaging section 116 is simpler and the circuit scale is smaller. Furthermore, the radio reception apparatus of this embodiment can reduce adders and subtractors compared to the radio reception apparatus according to Embodiment 1, and can thereby reduce the amount of calculations and improve the processing speed.

As shown above, the radio reception apparatus according to this embodiment carries out in-phase additions between correlation values $D_{plus}$ corresponding to +A sent from antenna 2 and in-phase additions between correlation values $D_{minus}$ corresponding to -A sent from antenna 2, thus making it possible to carry out in-phase additions on pilot channel signals and obtain diversity gain with a smaller circuit scale and smaller amount of calculations compared to the radio reception apparatus according to Embodiment 1.

(Embodiment 3)

The radio reception apparatus according to Embodiment 3 of the present invention carries out in-phase additions of correlation values $D_{plus}$ corresponding to +A sent from antenna 2 and in-phase additions of correlation values $D_{minus}$ corresponding to -A sent from antenna 2 by switching between these two in-phase additions every predetermined unit (for example, on a slot-by-slot basis).

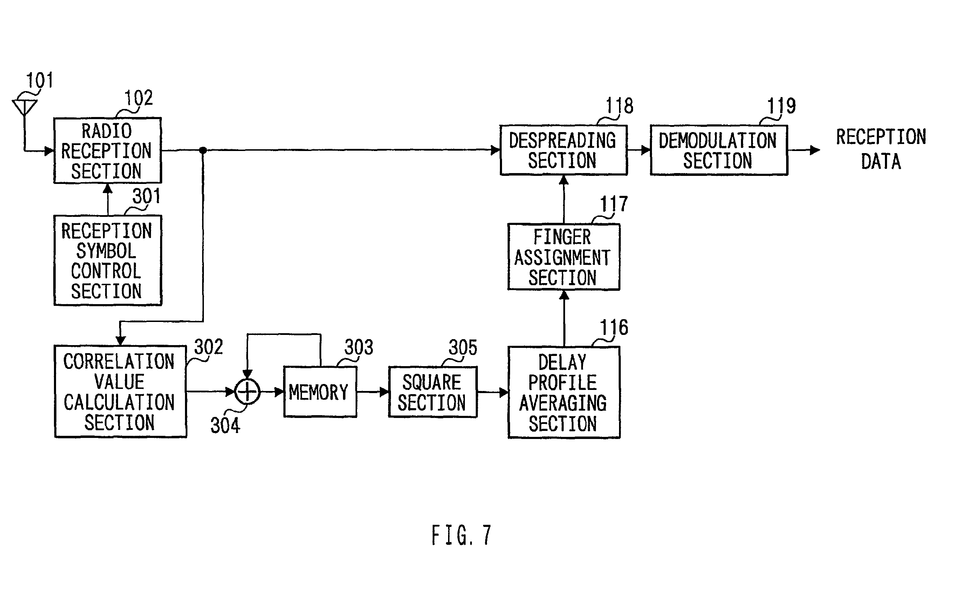

FIG.7 is a main block diagram showing an outlined configuration of the radio reception apparatus according to Embodiment 3 of the present invention. The same components as those of Embodiment 1 are assigned the same reference numerals and detailed explanations thereof are omitted.

In FIG.7, reception symbol control section 301 controls radio reception section 102 so that only specific pilot symbols are received. That is, radio reception section 102 operates only when specific pilot symbols are received.

Correlation value calculation section 302 carries out despreading processing on pilot channel signals. Memory 303 and adder 304 carry out in-phase additions between $D_{plus}$'s and between $D_{minus}$'s. Square section 305 calculates the squares of $D_{plus}$'s and $D_{minus}$'s respectively.

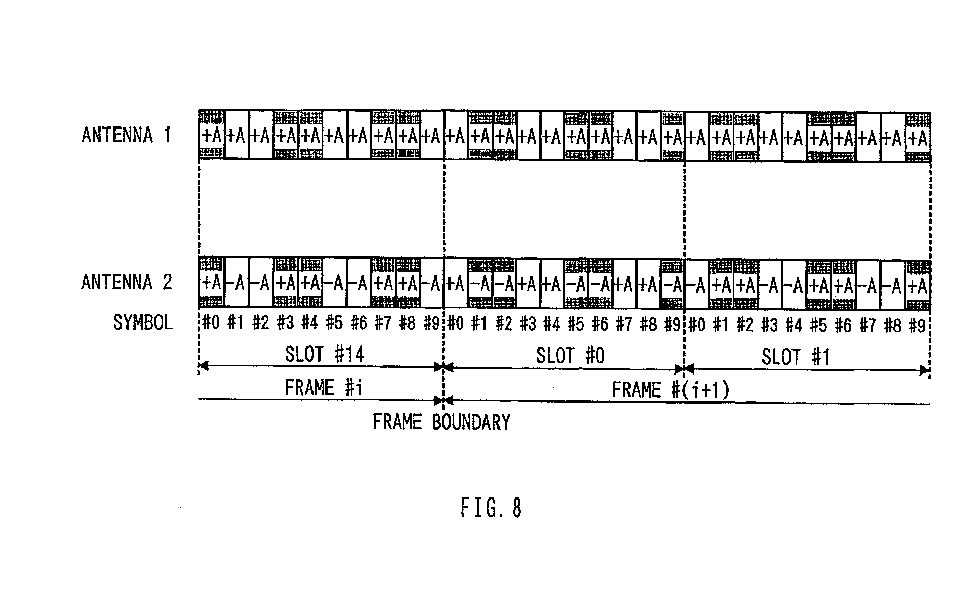

Then, an operation of the radio reception apparatus in the above configuration will be explained using FIG.8 again. FIG.8 illustrates pilot symbol transmission patterns defined by the Mobile Communication Standard 3G TS 25.211 version 3.1.0.

Reception symbol control section 301 controls radio reception section 102 so that only the hatched symbols in FIG.8 are received. That is, reception symbol control section 301 allows radio reception section 102 to operate only at timings at which the hatched symbols in FIG.8 are received.

Thus, in slot #14, $D_{plus}$ shown in Expression (8) above is output from correlation value calculation section 103 at timing at which symbol #3, #4, #7 or #8 is received. Hereafter, likewise, in slot #0, $D_{minus}$ shown in Expression (9) above is output from correlation value calculation section 103 at timing at which symbol #1, #2, #5 or #6 is received, and in slot #1, $D_{plus}$ shown in Expression (8) above is output from correlation value calculation section 103 at timing at which symbol #1, #2, #5 or #6 is received. Thus, either $D_{plus}$ or $D_{minus}$ is output alternately on a slot-by-slot basis from correlation value calculation section 302.

$D_{plus}$'s or $D_{minus}$'s output from correlation value calculation section 302 are subjected slot by slot to in-phase additions n times by memory 303 and adder 304. Then, after n in-phase additions, memory 303 outputs the signal shown in Expression (16) for $D_{plus}$ and the signal shown in Expression (17) for $D_{minus}$ to square section 305.

The signal shown in Expression (16) and the signal shown in Expression (17) are each squared by square section 305 and averaged by delay profile averaging section 116. Thus, delay profile averaging section 116 outputs an averaged delay profile as shown in Expression (18). Thus, S/N of a pilot channel signal is shown by Expression (19) above as in the case of Embodiment 2.

Here, a comparison between the radio reception apparatus of this embodiment and the radio reception apparatus of Embodiment 2 shows that the configuration from correlation value calculation section 103 to delay profile averaging section 116 is simpler and the circuit scale is smaller. Particularly, the radio reception apparatus of this embodiment can reduce memory compared to the radio reception apparatus according to Embodiment 2.

This embodiment has described, as an example, the case where in-phase additions between $D_{plus}$'s and in-phase additions between $D_{minus}$'s are switched slot by slot. However, this embodiment is not limited to this. This embodiment may also be constructed in such a way that a predetermined number of times is set and in-phase additions between $D_{plus}$'s and in-phase additions between $D_{minus}$'s are switched every predetermined number of times, for example, carrying out in-phase additions between $D_{minus}$'s a plurality of times after carrying out in-phase additions between $D_{plus}$'s a plurality of times. Or a predetermined interval may be set and in-phase additions between $D_{plus}$'s and in-phase additions between $D_{minus}$'s may be switched at the predetermined intervals.

Thus, the radio reception apparatus according to this embodiment carries out in-phase additions between correlation values $D_{plus}$ corresponding to +A sent from antenna 2 and in-phase additions between correlation values $D_{minus}$ corresponding to -A sent from antenna 2 by switching between these two in-phase additions every predetermined unit (for example, on a slot-by-slot basis), and can thereby carry out in-phase additions on pilot channel signals and obtain diversity gain as well with a smaller circuit scale compared to the radio reception apparatus according to Embodiment 2.


(Embodiment 4)

The radio reception apparatus according to Embodiment 4 of the present invention is the radio reception apparatus according to Embodiment 1 applied to a radio reception apparatus previously invented by the present inventor et al. (hereinafter referred to as "storage type radio reception apparatus").

This storage type radio reception apparatus retains reception data in memory, etc. temporarily and carries out spreading processing repeatedly using a spreading code assigned to each base station on the retained data. This invention is described in the Japanese Patent Application No.HEI 10-292545, entire content of which is expressly incorporated herein. The radio reception apparatus of this embodiment which is the radio reception apparatus of Embodiment 1 applied to the storage type radio reception apparatus will be explained below.

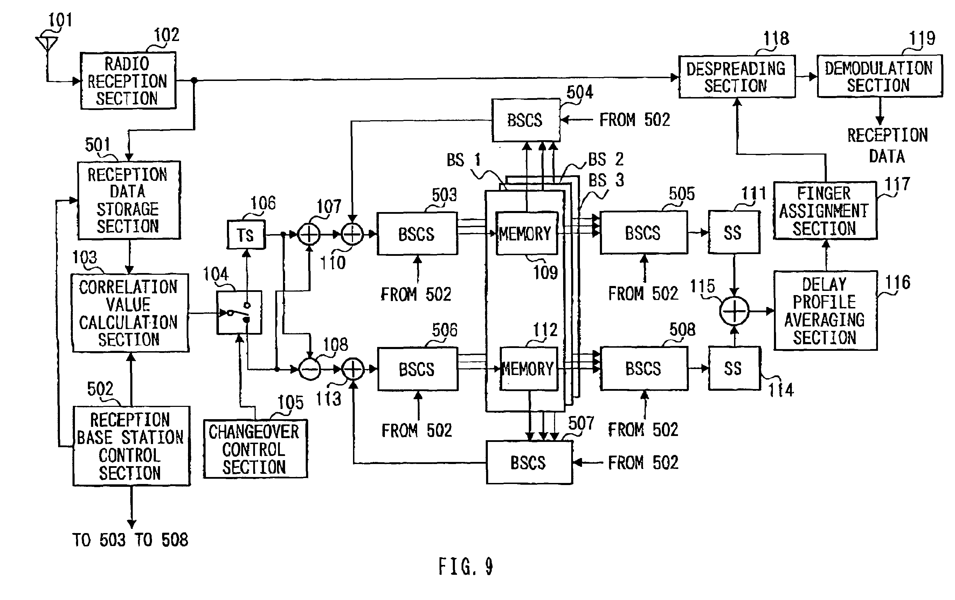

FIG.9 is a main block diagram showing an outlined configuration of the radio reception apparatus according to Embodiment 4 of the present invention. The same components as those of Embodiment 1 are assigned the same reference numerals and detailed explanations thereof are omitted.

In FIG.9, reception data storage section 501 temporarily retains reception data by a predetermined number of symbols at a time (here, suppose two symbols; a symbol odd-numbered from the start of the slot and a symbol even-numbered from the start of the slot). Reception base station control section 502 sequentially selects a base station from which to receive signals. Reception base station control section 502 controls changeover operations of base station changeover switches 503 to 508 in such a way that pilot channel signals are subjected to in-phase additions for every base station. Furthermore, as shown in FIG.9, this embodiment provides the same number of combinations of memory 109 and memory 112 as base stations from which to receive signals. Here, for convenience of explanations, suppose there are three base stations 1 to 3 from which to receive signals.

Then, an operation of the radio reception apparatus in the above configuration will be explained. A reception signal subjected to predetermined radio processing is retained in reception data storage section 501 two symbols at a time; a symbol odd-numbered from the start of the slot and a symbol even-numbered from the start of the slot. The reception symbols retained in reception data storage section 501 are output to correlation value calculation section 103 according to instructions from reception base station control section 502. At this time, the base station number indicating base station 1 is output from reception base station control section 502 to correlation value calculation section 103 and base station changeover switches 503 to 508.

Correlation value calculation section 103 performs despreading processing on pilot symbols according to the above base station number using the spreading codes assigned to base station 1.

Furthermore, at this time, base station changeover switch 503 connects adder 110 and memory 109 of base station 1 according to the above base station number. On the other hand, base station changeover switch 504 connects memory 109 of base station 1 and adder 110 and base station changeover switch 505 connects memory 109 of base station 1 and square section 111. Likewise, base station changeover switch 506 connects adder 113 and memory 112 of base station 1, base station changeover switch 507 connects memory 112 of base station 1 and adder 113 and switch 508 connects memory 112 of base station 1 and square section 114.

In this way, $C_1$ output from adder 107 is subjected to an in-phase addition with respect to base station 1 by memory 109 of base station 1 and adder 110 and output from memory 109 of base station 1 to square section 111. Furthermore, $C_2$ output from adder 113 is subjected to an in-phase addition with respect to base station 1 by memory 112 of base station 1 and adder 113 and output from memory 112 of base station 1 to square section 114.

Then, the same reception symbols used for base station 1 is output from reception data storage section 501 to correlation value calculation section 103 according to instructions from reception base station control section 502. At this time, the base station number indicating base station 2 is output from reception base station control section 502 to correlation value calculation section 103 and base station changeover switches 503 to 508.

Hereafter, the same operation as in the case of base station 1 is carried out and $C_1$ output from adder 107 is subjected to an in-phase addition with respect to base station 2 by memory 109 of base station 2 and adder 110, and $C_2$ output from adder 113 is subjected to an in-phase addition with respect to base station 2 by memory 112 of base station 2 and adder 113.

With respect to base station 3, the same operation as that described above is carried out and $C_1$ output from adder 107 is subjected to an in-phase addition by memory 109 of base station 3 and adder 110 with respect to base station 3, and $C_2$ output from adder 113 is subjected to an in-phase addition by memory 112 of base station 3 and adder 113 with respect to base station 3.

In this way, according to the radio reception apparatus of this embodiment, pilot channel signals received by the storages type radio reception apparatus are subjected to in-phase additions and it is therefore possible to carry out an in-phase addition on pilot channel signals corresponding to a plurality of base stations and obtain diversity gain as well. Therefore, the radio reception apparatus of this embodiment can improve accuracy in path searching.


(Embodiment 5)


The radio reception apparatus according to Embodiment 5 of the present invention is the radio reception apparatus according to Embodiment 2 applied to a storage type radio reception apparatus.

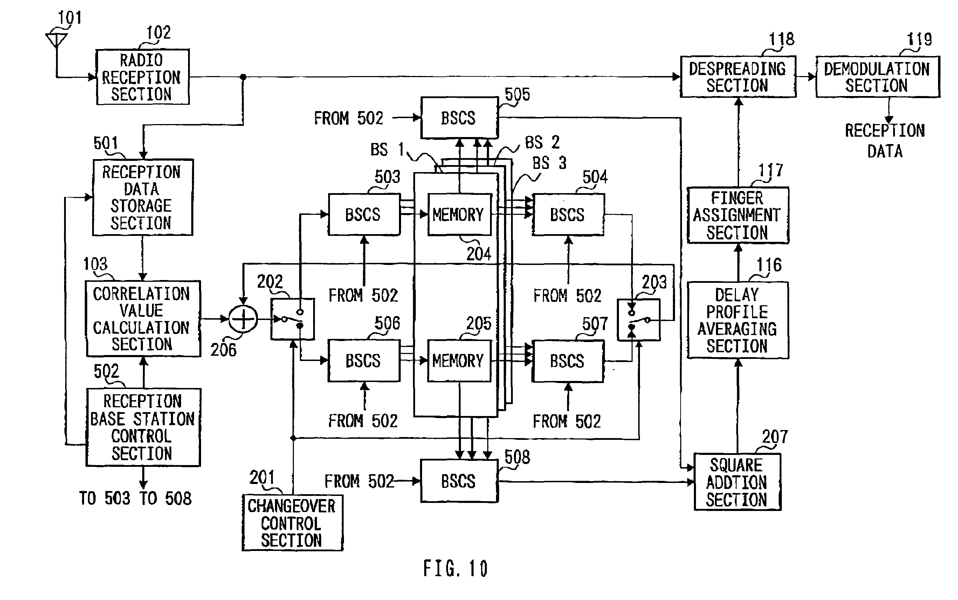

FIG.10 is a main block diagram showing an outlined configuration of the radio reception apparatus according to Embodiment 5 of the present invention. The same components as those of Embodiment 2 and Embodiment 4 are assigned the same reference numerals and detailed explanations thereof are omitted.

In FIG.10, reception data storage section 501 temporarily retains reception data symbol by symbol. Reception base station control section 502 sequentially selects a base station from which to receive signals. Reception base station control section 502 controls changeover operations of base station changeover switches 503 to 508 in such a way that pilot channel signals are subjected to in-phase additions for every base station. Furthermore, as shown in FIG.10, this embodiment provides the same number of combinations of memory 204 and 205 as base stations from which to receive signals. Here, for convenience of explanations, suppose there are three base stations 1 to 3 from which to receive signals.

Then, an operation of the radio reception apparatus in the above configuration will be explained. A reception signal subjected to predetermined radio processing is retained in reception data storage section 501 symbol by symbol. The reception symbols retained in reception data storage section 501 are output symbol by symbol to correlation value calculation section 103 according to instructions from reception base station control section 502. At this time, the base station number indicating base station 1 is output from reception base station control section 502 to correlation value calculation section 103 and base station changeover switches 503 to 508.

Correlation value calculation section 103 performs despreading processing on pilot symbols according to the above base station number using the spreading code assigned to base station 1.

Furthermore, at this time, base station changeover switch 503 connects switch 202 and memory 204 of base station 1 according to the above base station number. On the other hand, base station changeover switch 504 connects memory 204 of base station 1 and switch 203, and base station changeover switch 505 connects memory 204 of base station 1 and square addition section 207. Likewise, base station changeover switch 506 connects switch 202 and memory 205 of base station 1, base station changeover switch 507 connects memory 205 of base station 1 and switch 203, and switch 508 connects memory 205 of base station 1 and square addition section 207.

Furthermore, at this time, only $D_{plus}$ is output to memory 204 and only $D_{minus}$ is output to memory 205 through changeover control over switch 202 and switch 203. Thus, $D_{plus}$'s or $D_{minus}$'s output from correlation value calculation section 103 are subjected to in-phase additions with respect to base station 1 and output to square addition section 207.

Then, the same reception symbols as that used with respect to base station 1 is output from reception data storage section 501 to correlation value calculation section 103 according to instructions from reception base station control section 502. At this time, the base station number indicating base station 2 is output from reception base station control section 502 to correlation value calculation section 103 and base station changeover switches 503 to 508.

Hereafter, the same operation as in the case of base station 1 is carried out and $D_{plus}$'s or $D_{minus}$'s output from correlation value calculation section 103 are subjected to in-phase additions with respect to base station 2 respectively. with respect to base station 3, the same operation as that described above is carried out and $D_{plus}$'s or $D_{minus}$'s output from correlation value calculation section 103 are subjected to in-phase additions with respect to base station 3 respectively.

As shown above, according to the radio reception apparatus of this embodiment, the storage type radio reception apparatus carries out an in-phase addition between correlation values $D_{plus}$'s corresponding to +A sent from antenna 2 and an in-phase addition between correlation values $D_{minus}$'s corresponding to -A sent from antenna 2, and can thereby carry out in-phase additions on pilot channel signals corresponding to a plurality of base stations and obtain diversity gain as well with a smaller circuit scale and smaller amount of calculations compared to the radio reception apparatus according to Embodiment 4. Furthermore, since the radio reception apparatus according to this embodiment carries out in-phase additions between $D_{plus}$'s or $D_{minus}$'s, it is only necessary to retain one pilot symbol at a time and it is thereby possible to reduce the capacity of the reception data storage section.

(Embodiment 6)

The radio reception apparatus according to Embodiment 6 of the present invention is the radio reception apparatus according to Embodiment 3 applied to a storage type radio reception apparatus.

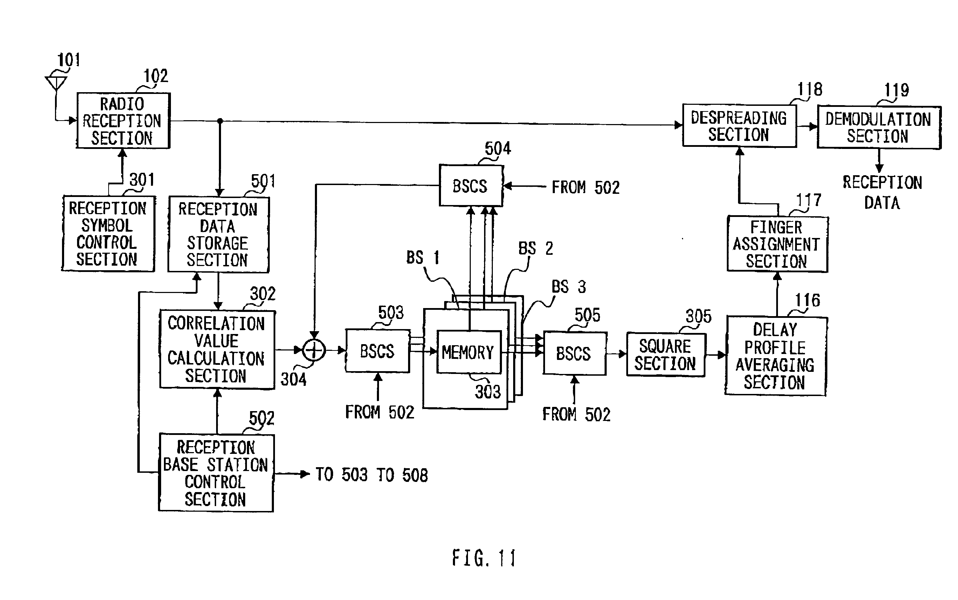

FIG.11 is a main block diagram showing an outlined configuration of the radio reception apparatus according to Embodiment 6 of the present invention. The same components as those of Embodiment 3 and Embodiment 4 are assigned the same reference numerals and detailed explanations thereof are omitted.

In FIG.11, reception data storage section 501 temporarily stores reception data output from radio reception section 102 symbol by symbol. Reception base station control section 502 sequentially selects a base station from which to receive signals. Reception base station control section 502 controls changeover operations of base station changeover switches 503 to 505 so that pilot channel signals are subjected to in-phase additions for the respective base stations. Furthermore, as shown in FIG.11, this embodiment provides the same number of memories 303 as base stations from which to receive signals. Here, for convenience of explanations, suppose there are three base stations 1 to 3 from which to receive signals.

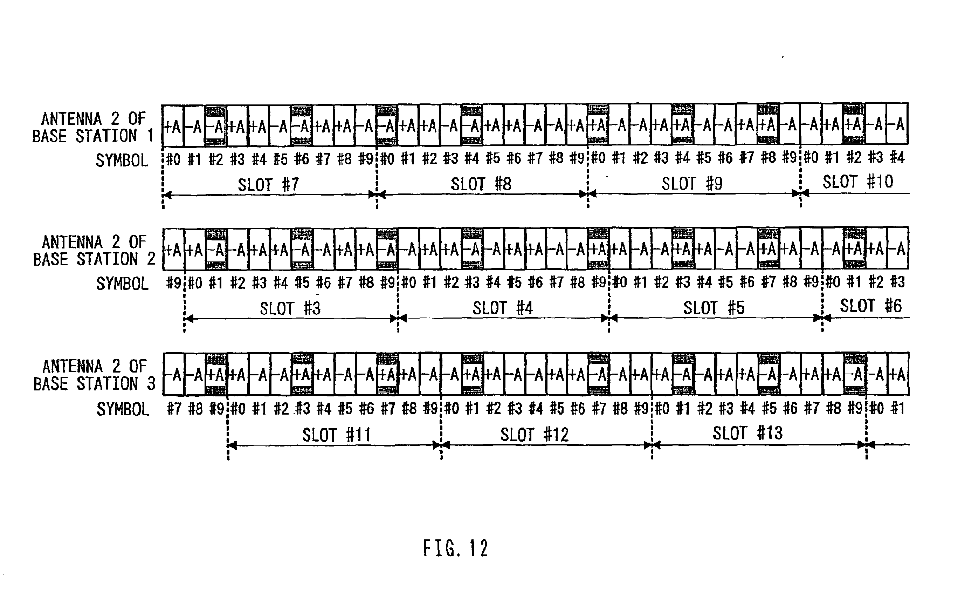

Then, the radio reception apparatus in the above configuration will be explained. FIG.12 illustrates pilot symbol transmission patterns defined by the Mobile Communication Standard 3G TS 25.211 version 3.1.0. However, for convenience of explanations, suppose only pilot symbols sent from antenna 2 of each base station are shown here.

Reception symbol control section 301 controls radio reception section 102 so that only hatched symbols in FIG.12 are received. That is, reception symbol control section 301 allows radio reception section 102 to operate only at timings at which the hatched symbols in FIG.12 are received.

More specifically, reception symbol control section 301 allows radio reception section 102 to operate a plurality of times (4 times in FIG.12) at timing at which four symbols are received, and then allows radio reception section 102 to operate one time when six symbols (after 4 symbols + 2 symbols) are received, and allows radio reception section 102 to operate a plurality of times (4 times in FIG.12) at timing at which four symbols are received again. By repeating this operation, as shown in FIG.12, symbols including +A of antenna 2 and symbols including -A of antenna 2 are received alternately four times each for each base station.

Such control of reception symbol control section 301 is based on transmission patterns of pilot symbols sent from antenna 2. That is, in the transmission pattern shown in FIG.12, the cycle of repetitions of the transmission pattern is 4 symbols. More specifically, the transmission pattern consists of repetitions of a "+A, -A, -A, +A" pattern. Therefore, reception symbol control section 301 controls radio reception section 102 according to the cycle of repetitions of the transmission pattern as described above so as to receive symbols including +A of antenna 2 and symbols including -A of antenna 2 four times each alternately for each base station.

The reception signal subjected to predetermined radio processing by radio reception section 102 is stored in reception data storage section 501. The reception symbols stored in reception data storage section 501 are output to correlation value calculation section 302 according to instructions from reception base station control section 502. At this time, the base station number indicating base station 1 is output from reception base station control section 502 to correlation value calculation section 302 and base station changeover switches 503 to 505.

Correlation value calculation section 302 applies despreading processing on pilot symbols using a spreading code assigned to base station 1 according to the above base station number.

At this time, base station changeover switch 503 connects adder 304 and memory 303 of base station 1 according to the above base station number. On the other hand, base station changeover switch 504 connects memory 303 of base station 1 and adder 304, and base station changeover switch 505 connects memory 303 of base station 1 and square section 305. Then, $D_{plus}$'s or $D_{minus}$'s output from correlation value calculation section 302 are subjected to in-phase additions by memory 303 and adder 304 four times each with respect to base station 1.

Then, the same reception symbols used for base station 1 is output from reception data storage section 501 to correlation value calculation section 302 according to instructions from reception base station control section 502. At this time, reception base station control section 502 outputs the base station number indicating base station 2 to correlation value calculation section 302 and base station changeover switches 503 to 505.

Thereafter, the same operation as that of base station 1 is carried out and $D_{plus}$'s or $D_{minus}$'s output from correlation value calculation section 302 are subjected to in-phase additions with respect to base station 2 four times each. Furthermore, the above-described same operation is also carried out for base station 3 and $D_{plus}$'s or $D_{minus}$'s

output from correlation value calculation section 302 are subjected to in-phase additions four times each with respect to base station 3.

As shown above, according to the radio reception apparatus of this embodiment, the storage type radio reception apparatus carries out in-phase additions between correlation values $D_{plus}$'s corresponding to +A sent from antenna 2 and in-phase addition between correlation values $D_{minus}$'s corresponding to -A sent from antenna 2 by switching between these two in-phase additions every predetermined number of symbols, and can thereby carry out in-phase additions on pilot channel signals and obtain diversity gain as well with a smaller circuit scale compared to the radio reception apparatus according to Embodiment 5.

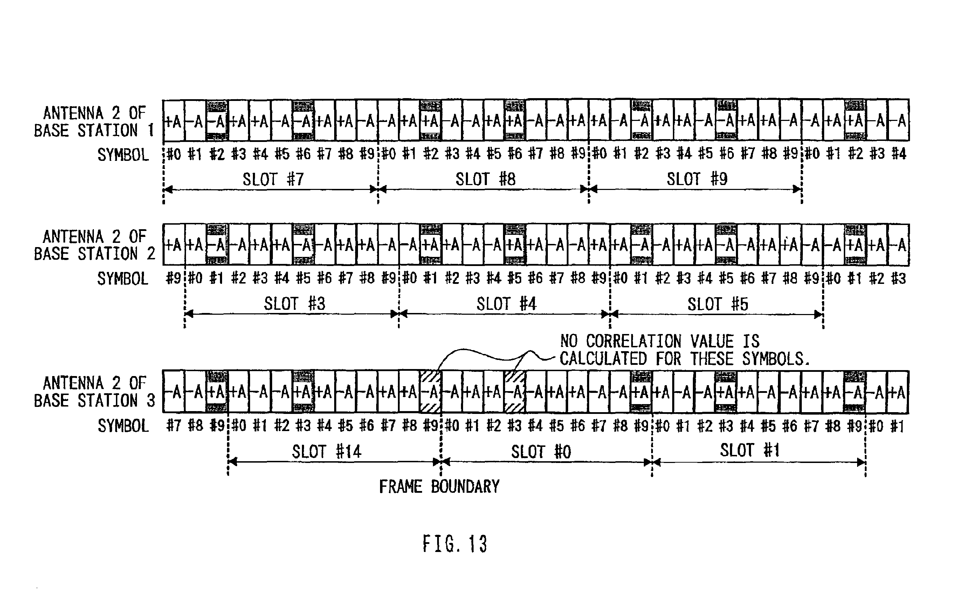

By the way, this embodiment can also be constructed so that correlation value calculation section 302 does not calculate correlation values for symbols (symbols indicated with hatching of base station 3) before and after the frame boundary on which the repetition pattern of "+A, -A, -A, +A" comes undone as shown in FIG. 13. More specifically, reception base station control section 502 determines the frame boundary for every base station and controls correlation value calculation section 302 so as not to calculate correlation values for symbols before and after the frame boundary.

Preventing calculations of correlation values for symbols before and after the frame boundary makes it possible to prevent in-phase additions of $D_{plus}$ and $D_{minus}$. This prevents the reception characteristics on the frame boundary from deteriorating. Embodiment 3 can also be constructed so as not to calculate correlation values for symbols before and after the frame boundary.

As described above, the present invention can obtain diversity gain and improve the reception characteristics also when in-phase additions are applied to pilot channel signals during diversity transmission.

This application is based on the Japanese Patent Application No.2000-131672 filed on April 28, 2000, entire content of which is expressly incorporated by reference herein.

Industrial Applicability

The present invention is applicable to a communication terminal apparatus and base station apparatus used in a mobile communication system.

**Claims**

1. A radio reception apparatus that receives signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, comprising:

   an extractor that extracts a signal expressed with the first propagation coefficient and a signal expressed with the second propagation coefficient from the reception signals; and
   an adder that performs in-phase additions of the extracted signals.

2. The radio reception apparatus according to claim 1, wherein the extractor comprising:

   a sorter that sorts the reception signals into two groups corresponding to a symbol pattern of the second signal so that a repetition cycle of signals comprising +A symbol of the first signal and +A symbol of the second signal is equal to a repetition cycle of signals comprising +A symbol of the first signal and -A symbol of the second signal; and
   a separator that separates the reception signal into the signals each expressed with the first propagation coefficient and the signals each expressed with the second propagation coefficient by calculating a sum of and difference between the signal sorted as one group and the signal sorted as the other.

3. The radio reception apparatus according to claim 1, further comprising:

   a storage that temporarily stores the reception signals; and
   a despreader that performs despreading processing on the same reception signal stored in the storage using spreading codes corresponding to a plurality of communication partners.

4. A radio reception apparatus that receives signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, comprising:

a separator that separates the reception signals into a signal comprising +A symbol of the first signal and +A symbol of the second signal, and a signal comprising +A symbol of the first signal and -A symbol of the second signal; and
an adder that performs in-phase additions of the respective separated signals.

5. The radio reception apparatus according to claim 4, further comprising:

a storage that temporarily stores the reception signals; and
a despreader that performs despreading processing on the same reception signal stored in the storage using spreading codes corresponding to a plurality of communication partners.

6. A radio reception apparatus that receives signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, comprising:

a receiver that receives a third signal comprising +A symbol of the first signal and +A symbol of the second signal and a fourth signal comprising +A symbol of the first signal and -A symbol of the second signal among the reception signals by alternating the third signals and the fourth signals, by a plurality of symbols each at predetermined intervals; and
an adder that performs in-phase additions of the third signals and in-phase additions of the fourth signals.

7. The radio reception apparatus according to claim 6, further comprising:

a storage that temporarily stores the reception signals; and
a despreader that performs despreading processing on the same reception signal stored in the storage using spreading codes corresponding to a plurality of communication partners.

8. The radio reception apparatus according to claim 6, wherein the adder performs no in-phase addition of symbols on the different sides of a frame boundary.

9. A communication terminal apparatus equipped with a radio reception apparatus that receives signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, said radio reception apparatus comprising:

an extractor that extracts a signal expressed with the first propagation coefficient and a signal expressed with the second propagation coefficient from the reception signals; and
an adder that performs in-phase additions of the extracted signals.

10. A communication terminal apparatus equipped with a radio reception apparatus that receives signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, said radio reception apparatus comprising:

a separator that separates the reception signals into a signal comprising +A symbol of the first signal and +A symbol of the second signal, and a signal comprising +A symbol of the first signal and -A symbol of the second signal; and
an adder that performs in-phase additions of the respective separated signals.

11. A communication terminal apparatus equipped with a radio reception apparatus that receives signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, said radio reception apparatus comprising:

a receiver that receives a third signal comprising +A symbol of the first signal and +A symbol of the second signal and a fourth signal comprising +A symbol of the first signal and -A symbol of the second signal among the reception signals by alternating the third signals and the fourth signals, by a plurality of symbols each at predetermined intervals; and

an adder that performs in-phase additions of the third signals and in-phase additions of the fourth signals.

12. A base station apparatus equipped with a radio reception apparatus that receives signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, said radio reception apparatus comprising:

an extractor that extracts a signal expressed with the first propagation coefficient and a signal expressed with the second propagation coefficient from the reception signals; and
an adder that performs in-phase additions of the extracted signals.

13. A base station apparatus equipped with a radio reception apparatus that receives signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, said radio reception apparatus comprising:

a separator that separates the reception signals into a signal comprising +A symbol of the first signal and +A symbol of the second signal, and a signal comprising +A symbol of the first signal and -A symbol of the second signal; and
an adder that performs in-phase additions of the respective separated signals.

14. A base station apparatus equipped with a radio reception apparatus that receives signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, said radio reception apparatus comprising:

a receiver that receives a third signal comprising +A symbol of the first signal and +A symbol of the second signal and a fourth signal comprising +A symbol of the first signal and -A symbol of the second signal among the reception signals by alternating the third signals and the fourth signals, by a plurality of symbols each at predetermined intervals; and
an adder that performs in-phase additions of the third signals and in-phase additions of the fourth signals.

15. A radio reception method for receiving signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, comprising:

an extracting step of extracting a signal expressed with the first propagation coefficient and a signal expressed with the second propagation coefficient from the reception signals; and
an adding step of performing in-phase additions of the extracted signals.

16. A radio reception method for receiving signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, comprising:

a separating step of separating the reception signals into a signal comprising +A symbol of the first signal and +A symbol of the second signal, and a signal comprising +A symbol of the first signal and -A symbol of the second signal; and
an adding step of performing in-phase additions of the respective separated signals.

17. A radio reception method for receiving signals each having a first signal comprising only a no sign-inverted +A symbol sent through a propagation path with a first propagation coefficient and a second signal comprising a no sign-inverted +A symbol and a sign-inverted -A symbol sent through a propagation path with a second propagation coefficient, comprising:

**EP 1 204 221 A1**

a receiving step of receiving a third signal comprising +A symbol of the first signal and +A symbol of the second signal and a fourth signal comprising +A symbol of the first signal and -A symbol of the second signal among the reception signals by alternating the third signals and the fourth signals, by a plurality of symbols each at predetermined intervals; and

an adding step of performing in-phase additions of the third signals and in-phase additions of the fourth signals.

FIG. 1

FIG. 2

FIG. 3

EP 1 204 221 A1

FIG. 4

EP 1 204 221 A1

ANTENNA 1 | +A | +A | +A | +A | +A | +A | +A | +A | +A | +A | +A | +A | +A | +A | +A | +A | +A | +A | +A | +A | +A | +A | +A | +A | +A | +A | +A | +A | +A | +A

ANTENNA 2 | +A | -A | -A | +A | +A | -A | -A | +A | +A | -A | +A | -A | -A | +A | +A | -A | -A | +A | +A | -A | -A | +A | +A | -A | -A | +A | +A | -A | -A | +A

SYMBOL #0 #1 #2 #3 #4 #5 #6 #7 #8 #9 #0 #1 #2 #3 #4 #5 #6 #7 #8 #9 #0 #1 #2 #3 #4 #5 #6 #7 #8 #9

SLOT #14      SLOT #0      SLOT #1

FRAME #i      FRAME #(i+1)

FRAME BOUNDARY

FIG. 5

RECEPTION DATA

119 DEMODULATION SECTION

118 DESPREADING SECTION

117 FINGER ASSIGNMENT SECTION

116 DELAY PROFILE AVERAGING SECTION

207 SQUARE ADDITION SECTION

204 MEMORY

205 MEMORY

203

202

201 CHANGEOVER CONTROL SECTION

206

102 RADIO RECEPTION SECTION

101

103 CORRELATION VALUE CALCULATION SECTION

FIG. 6

FIG. 7

EP 1 204 221 A1

EP 1 204 221 A1

ANTENNA 1 | +A +A +A +A +A +A +A +A +A +A +A +A +A +A +A +A +A +A +A +A +A +A +A +A +A +A +A +A +A +A

ANTENNA 2 | +A -A -A +A +A -A -A +A +A -A +A -A -A +A +A -A -A +A +A -A -A +A +A -A -A +A +A -A -A +A

SYMBOL | #0 #1 #2 #3 #4 #5 #6 #7 #8 #9 | #0 #1 #2 #3 #4 #5 #6 #7 #8 #9 | #0 #1 #2 #3 #4 #5 #6 #7 #8 #9

|←————— SLOT #14 —————→|←————— SLOT #0 —————→|←————— SLOT #1 —————→|

|←——————— FRAME #i ———————→|←——————————— FRAME #(i+1) ———————————→|

FRAME BOUNDARY

FIG. 8

FIG. 9

EP 1 204 221 A1

FIG. 10

EP 1 204 221 A1

FIG. 11

EP 1 204 221 A1

ANTENNA 2 OF
BASE STATION 1

+A −A −A +A +A −A −A +A +A −A −A +A +A −A −A +A +A −A −A +A +A −A −A +A +A −A −A +A +A −A −A +A

SYMBOL #0 #1 #2 #3 #4 #5 #6 #7 #8 #9 #0 #1 #2 #3 #4 #5 #6 #7 #8 #9 #0 #1 #2 #3 #4 #5 #6 #7 #8 #9 #0 #1 #2 #3 #4

SLOT #7  SLOT #8  SLOT #9  SLOT #10

ANTENNA 2 OF
BASE STATION 2

+A +A −A −A +A +A −A −A +A +A −A −A +A +A −A −A +A +A −A −A +A +A −A −A +A +A −A −A +A +A −A −A +A +A −A

SYMBOL #9 #0 #1 #2 #3 #4 #5 #6 #7 #8 #9 #0 #1 #2 #3 #4 #5 #6 #7 #8 #9 #0 #1 #2 #3 #4 #5 #6 #7 #8 #9 #0 #1 #2 #3

SLOT #3  SLOT #4  SLOT #5  SLOT #6

ANTENNA 2 OF
BASE STATION 3

−A −A +A +A −A −A +A +A −A −A +A +A −A −A +A +A −A −A +A +A −A −A +A +A −A −A +A +A −A −A +A +A −A −A +A

SYMBOL #7 #8 #9 #0 #1 #2 #3 #4 #5 #6 #7 #8 #9 #0 #1 #2 #3 #4 #5 #6 #7 #8 #9 #0 #1 #2 #3 #4 #5 #6 #7 #8 #9 #0 #1

SLOT #11  SLOT #12  SLOT #13

FIG. 12

EP 1 204 221 A1

FIG. 13

| INTERNATIONAL SEARCH REPORT | International application No. |
| --- | --- |
| | PCT/JP01/03689 |

A. CLASSIFICATION OF SUBJECT MATTER
    Int.Cl⁷   H04B 7/06, H04J13/04

According to International Patent Classification (IPC) or to both national classification and IPC

B. FIELDS SEARCHED

Minimum documentation searched (classification system followed by classification symbols)
    Int.Cl⁷   H04B 7/06, H04J13/04

Documentation searched other than minimum documentation to the extent that such documents are included in the fields searched
    Jitsuyo Shinan Koho          1922-1996     Toroku Jitsuyo Shinan Koho   1994-2001
    Kokai Jitsuyo Shinan Koho    1971-2001     Jitsuyo Shinan Toroku Koho   1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| P,A | JP, 2001-36430, A (NEC Corporation), 09 February, 2001 (09.02.01), Full text   (Family: none) | 1-17 |
| P,A | JP, 2001-24557, A (NEC Corporation), 26 January, 2001 (26.01.01), Full text   (Family: none) | 1-17 |
| A | JP, 11-251985, A (Matsushita Electric Ind. Co., Ltd.), 17 September, 1999 (17.09.99), Full text   (Family: none) | 1-17 |
| A | JP, 11-88247, A (NEC Corporation), 30 March, 1999 (30.03.99), Full text & US, 5999560, A | 1-17 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 June, 2001 (26.06.01) | 10 July, 2001 (10.07.01) |

| Name and mailing address of the ISA/ | Authorized officer |
| --- | --- |
| Japanese Patent Office | |
| Facsimile No. | Telephone No. |

Form PCT/ISA/210 (second sheet) (July 1992)